Europäisches Patentamt

(19) European Patent Office

Office européen des brevets

(11) Veröffentlichungsnummer: **0 044 593**
**B1**

(12) # EUROPÄISCHE PATENTSCHRIFT

(45) Veröffentlichungstag der Patentschrift:
04.04.84

(51) Int. Cl.³: **F 16 C 29/04**

(21) Anmeldenummer: **81200793.8**

(22) Anmeldetag: **09.07.81**

(54) Wälzgelagerte Längsführung.

(30) Priorität: **17.07.80 CH 5492/80**

(73) Patentinhaber: **Agathon A.G. Maschinenfabrik, Obere Steingrubenstrasse 48, CH-4500 Solothurn (CH)**

(43) Veröffentlichungstag der Anmeldung:
**27.01.82 Patentblatt 82/4**

(72) Erfinder: **Pfluger, Walter, Obere Sternengasse 25, CH-4500 Solothurn (CH)**

(45) Bekanntmachung des Hinweises auf die Patenterteilung:
**04.04.84 Patentblatt 84/14**

(74) Vertreter: **Egli, Johann et al, Bovard AG Patentanwälte VSP Optingenstrasse 16, CH-3000 Bern 25 (CH)**

(84) Benannte Vertragsstaaten:
**AT BE FR GB IT SE**

(56) Entgegenhaltungen:
**CH - A - 476 226**
**DE - U - 1 919 240**
**DE - U - 7 139 522**
**FR - A - 1 031 490**
**US - A - 3 210 135**
**US - A - 3 353 876**

## Wälzgelagerte Längsführung

Die Erfindung betrifft eine wälzgelagerte Längsführung nach dem Oberbegriff von Patentanspruch 1.

Bei einer aus der CH-A-476 226 bekannten Längsführung hat jeder Wälzkörper eine mittlere Lauffläche, die mit der innenliegenden konvexen Laufbahn in Linienberührung steht, und zwei daneben befindliche Laufflächen, die beide mit der außenliegenden, konkaven Laufbahn in Linienberührung stehen.

Mit dieser Ausbildung wurde die Absicht verfolgt, die Hertzsche Pressung zu vermindern durch verbesserte Anschmiegung der Wälzkörperlaufflächen an die Laufbahnen. Damit sollten auch die Belastbarkeit und die Steifigkeit der Führungskonstruktion erhöht werden, im Vergleich zu einer Führungskonstruktion, bei der die Wälzkörper aus Kugeln bestehen.

Dieser Vorschlag hat aber den Nachteil, daß an den drei linienförmigen Berührungsstellen jedes Wälzkörpers die Abwälzradien eine sich über die Länge jeder dieser Berührungsstellen verändernde Größe haben. Er kann also nur an einem Punkt jeder dieser Berührungstellen ein reines Abwälzen stattfinden; mit zunehmendem Abstand von diesem Punkt nach der einen und nach der anderen Seite wächst der »Schlupf«. Es treten also unvermeidlicherweise Reibungserscheinungen auf, die mit der Zahnflankenreibung in gewissen Verzahnungen vergleichbar sind. Diese Reibungserscheinungen haben erwiesenermaßen einen erhöhten Verschleiß und auch die Erzeugung von Reibungswärme zur Folge, um so mehr als aus wohlbekannten Erwägungen alle praktisch zur Ausführung gelangenden Wälzführungen so ausgelegt sind, daß Vorspannung auftritt.

Eine wälzgelagerte Längsführung der im Oberbegriff des Patentanspruchs 1 definierten Gattung ist aus der US-A-3 210 135 bekannt. Diese offenbart eine Längsführung, bei welcher der führende und der geführte Teil quadratischen Querschnitt haben, wobei an zwei diagonal gegenüberliegenden Ecken Reihen von Wälzkörpern vorliegen; diese bestehen aus einer Kugel, die eine äquatoriale Nut hat, deren Flanken zur Äquatorialebene unter 45° geneigt sind. Wohl stehen hier die beiden kugeligen Laufflächen mit den beiden von einer Eckkante ausgehenden Laufbahnen des äußeren Teiles in Punktberührung. Dagegen stehen die beiden aus den Rinnenflanken bestehenden Laufflächen mit den beiden auch von einer Eckkante ausgehenden Flächen (Laufbahnen) des inneren Teiles nicht in Punkt-, sondern in Linienberührung.

Es haftet also auch dieser bekannten Ausbildung der Nachteil an, daß zwischen den durch die Rillenflanken gebildeten Laufflächen und den zugehörigen, am inneren Teil vorliegenden Laufbahnen zwangsläufig die vorerwähnten, mit Erzeugung von Reibungswärme und mit Verschleiß verbundenen Reibungserscheinungen auftreten.

Hier will die Erfindung Abhilfe schaffen. Die Lösung wird, ausgehend von einer Längsführung der eingangs erwähnten Gattung, in einer Ausbildung gesehen, wie sie im kennzeichnenden Teil des Anspruches 1 umschrieben ist.

Eine solche Ausbildung hat gegenüber den beiden vorbekannten Konstruktionen den Hauptvorteil, daß, ähnlich wie bei herkömmlichen Konstruktionen, bei denen die Wälzkörper aus Kugeln bestehen, wieder reines Abwälzen ermöglicht ist, der Verschleiß und die Reibungswärme also nicht auftreten. Gegenüber dieser herkömmlichen Konstruktion hat sie den Vorteil, daß — bei gleichen Durchmessern — erheblich mehr Paare von Berührungsstellen auf dem Umfang untergebracht werden können, dies weil in einem Käfig zwischen den Öffnungen, in denen Wälzkörper aufgenommen sind, notwendigerweise ein genügend großer Abstand vorliegen muß. In der erfindungsgemäßen Konstruktion liegen gleichsam nur jene Kugelteile vor, die tragen. Schon aus diesem Grund wird die Tragfähigkeit bzw. Steifigkeit erhöht. Diese wird weiterhin dadurch erhöht, daß der rotative Freiheitsgrad zwischen führendem und geführtem Teil aufgehoben ist.

Hinsichtlich Anzahl von unterbringbaren Berührungsstellen bzw. von Wälzkörperreihen, die für die Tragfähigkeit bzw. Steifigkeit ausschlaggebend ist, sei darauf hingewiesen, daß in der Konstruktion nach der US-A-3 210 135 nur zwei Reihen von Wälzkörpern vorgesehen sind und bestenfalls zwei weitere Reihen an den anderen beiden Ecken vorgesehen werden könnten.

Gegenüber der vorbekannten Konstruktion mit rollenförmigen Wälzkörpern ergeben sich noch weitere Vorteile:

— es sind größere Toleranzen bezüglich Formfehlern zulässig,
— die Kontrolle der Wälzkörper ist erleichtert,
— Wälzkörper gegebener Größe können in Konstruktionen verwendet werden, die verschieden große Durchmesser der Laufbahnen haben (nur die Differenz dieser Durchmesser muß zum Durchmesser der kugelzonenförmigen Laufflächen der Wälzkörper passen, unter Berücksichtigung der gewünschten Vorspannung).

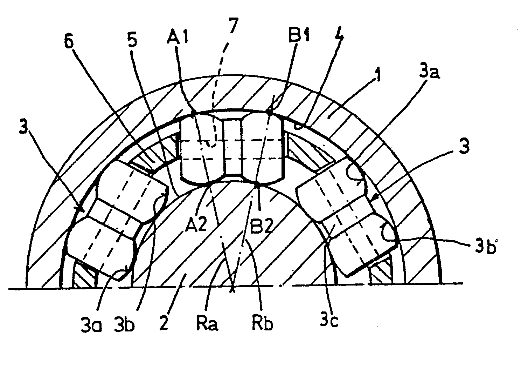

Im Vergleich zu einer in den Fig. 7 und 8 der US-A-3 210 135 gezeigten Variante in der in herkömmlicher Weise Kugeln als Wälzkörper verwendet sind, sei darauf hingewiesen, daß auf einem gegebenen Umfang einer Längsführung weniger kugelige Laufflächen untergebracht werden können als wenn zwei solcher Laufflächen an jedem Wälzkörper vorhanden sind, wie in der erfindungsgemäßen Ausbildung. Bei dieser wird die sogenannte »Steifigkeit« der Längsführung noch dadurch erhöht, daß in einem Käfig gehaltene rollenförmige Wälzkörper weniger Bewegungsfreiheitsgrade haben als Kugeln.

In einer Ausführungsform hat jeder Wälzkörper eine durchgehende zentrale Längsbohrung. Diese dient der Vergrößerung der Elastizität des Wälzkörpers, was unter gewissen Umständen, z. B. gewissen Vorspannverhältnissen, erwünscht sein kann.

Die Erfindung wird nachfolgend anhand beiliegender Zeichnung beispielsweise erläutert. Die einzige Figur zeigt einen Teilquerschnitt der Längsführung.

Von den Teilen 1 und 2 ist der eine der führende, der andere der geführte Teil. Rollenförmige Wälzkörper 3 sind zwischen koaxialen, zylindrischen Laufbahnen 4, 5 angeordnet, drehbar in einem Käfig 6 gehalten; die Einzelheiten der Käfigausbildung spielen im vorliegenden Zusammenhang keine Rolle.

Jeder Wälzkörper 3 hat zwei im Abstand voneinander gelegene, kugelzonenförmige Laufflächen 3a und 3b, die beide mit den Laufbahnen 4 und 5 im wesentlichen Punktberührung haben. Die beiden an der Lauffläche 3a gelegenen Berührungspunkte sind mit A1, A2 bezeichnet und liegen auf einem Radius Ra; die beiden an der Lauffläche 3b gelegenen Berührungspunkte sind mit B1, B2 bezeichnet und liegen auf einem Radius Rb. Der zwischen den beiden Laufflächen 3a, 3b gelegene Teil 3c ist im gezeigten Beispiel zylindrisch; seine Mantelfläche könnte aber eine andere, z. B. eine konkav gekrümmte Form haben; wichtig ist nur, daß diese Mantelfläche sicher keine Berührung mit der innen gelegenen Laufbahn 5 hat.

Im gezeigten Beispiel hat jeder Wälzkörper 3 eine durchgehende zentrale Längsbohrung 7, die zur Erhöhung seiner Elastizität dient.

Es versteht sich, daß — in Abweichung von der zeichnerischen Darstellung — neben jeden Wälzkörper zwei in Längsrichtung der Führung versetzt angeordnete Wälzkörper angeordnet sein könnten, ähnlich wie bei bekannten Ausführungen.

Hinsichtlich der Ausgestaltung der Führungsflächen im Querschnitt der Längsführung sind mannigfaltigste Ausführungsvarianten denkbar, von denen nur einige wenige erwähnt seien:

— einer konvexzylindrischen Führungsfläche (wie 5) könnten, pro Reihe von Wälzkörpern, zwei ebene, aber im Querschnitt zueinander geneigte Führungsflächenabschnitte oder ein ebener solcher Abschnitt gegenüber liegen, wobei die Anzahl und die Verteilung von Wälzkörperreihen beliebig gewählt sein könnten (in einem Extremfall wäre nur eine Wälzkörperreihe vorhanden);
— pro Wälzkörperreihe (wobei wieder nur eine einzige solche Reihe vorhanden sein könnte) könnten zwei ebenen, im Querschnitt zueinander geneigten Führungsflächenabschnitten am einen Teil solche Abschnitte am anderen Teil gegenüberliegen, wobei gegenüberliegende Flächenabschnitte zueinander parallel oder zueinander geneigt sein könnten.

Stets sollte aber durch Wahrung der Symmetrie der Führungsflächen bzw. Führungsflächenabschnitte in bezug auf die Symmetrieebene der bzw. jeder Wälzkörperreihe dafür gesorgt sein, daß für die beiden Laufflächen jedes Wälzkörpers gleiche Verhältnisse vorliegen, damit Abwälzen ohne damit einhergehendes Gleiten gewährleistet ist.

## Patentanspruch

Wälzgelagerte Längsführung, bei welcher rollenförmige Wälzkörper (3) zwischen Laufbahnen (4, 5) angeordnet sind, von denen die eine oder die einen an einem führenden Teil (1), die andere oder die anderen an einem geführten Teil (2) ausgebildet ist bzw. sind, wobei jeder Wälzkörper zwei in Abstand voneinander gelegene, kugelzonenförmige Laufflächen (3a, 3b) mit einheitlichem Durchmesser hat, die beide mit der oder den Laufbahnen (4, 5), die am einen der beiden Teile ausgebildet ist bzw. sind, im wesentlichen Punktberührung aufweisen, dadurch gekennzeichnet, daß dieselben Laufflächen (3a, 3b) auch je mit einer zugeordneten Laufbahn (5), die am anderen Teil (2) ausgebildet ist, im wesentlichen Punktberührung aufweisen, wobei für beide Laufflächen die gleichen Laufverhältnisse vorliegen.

## Claim

Roller-bearing axial guide in which roller-shaped roll bodies (3) are disposed between races of which one or some are formed on a guiding part (1), the other or others on a guided part (2), each roll body having two spaced, spherical-segment-shaped bearing surfaces (3a, 3b) of uniform diameter, both of which are in substantially point-wise contact with the race or races (4, 5) formed on the one of the two parts, characterized in that the same bearing surfaces (3a, 3b) are also each in substantially point-wise contact with an associated race (5) formed on the other part (2), the same rolling conditions existing for both bearing surfaces.

## Revendication

Guidage longitudinal à roulements dans lequel des corps de roulement (3) en forme de galets sont disposés entre des chemins de roulement (4, 5) dont l'un ou les uns sont formés sur une partie guidante (1) tandis que l'autre ou les autres sont formés sur une partie guidée (2), chaque corps de roulement présentant deux surfaces de roulement (3a, 3b) espacées l'une de l'autre et ayant la forme de couronnes sphériques qui présentent un diamètre unitaire et qui sont en contact ponctuel avec celui ou deux des chemins de roulement qui sont fournis sur une des deux parties, caractérisé en ce que ces mêmes surfaces de roulement (3a, 3b) sont également en contact ponctuel chacune avec un chemin de roulement correspondant (5) qui est formé sur l'autre partie (2) de sorte que pour les deux surfaces de roulement les mêmes conditions de roulement sont réalisées.